# EUROPEAN PATENT APPLICATION

(11) **EP 4 245 427 A1**
(43) Date of publication of application: **20.09.2023**
(21) Application number: 20961545.9
(22) Date of filing: 11.11.2020
(51) Int. Cl.: B05D 3/12, B05D 5/06, B32B 9/00, B32B 27/30, C09K 3/18

(54) **WATER-REPELLENT STRUCTURE, METHOD FOR PRODUCING WATER-REPELLENT STRUCTURE, AND METHOD FOR RECOVERING WATER REPELLENCY**

(71) Applicant: MITSUBISHI ELECTRIC CORPORATION, Chiyoda-ku Tokyo 100-8310 (JP)
(72) Inventor: YOSHIDA, Yasuhiro, Tokyo 100-8310 (JP); KOYAMA, Natsumi, Tokyo 100-8310 (JP)
(74) Representative: Meissner Bolte Partnerschaft mbB
(86) International application number: PCT/JP2020/042080
(87) International publication number: WO 2022/102017

(57) **Abstract**

A hydrophobic structure includes: a resin substrate; and a superhydrophobic mixture layer formed on the resin substrate and including a mixture of a hydrophobic part and a resin forming a surface portion of the resin substrate. The hydrophobic part includes one or both of a fluororesin and hydrophobic fine particles formed by subjecting inorganic fine particles having an average particle size of 5 nm or more and 30 nm or less to a hydrophobic treatment. The superhydrophobic mixture layer has a surface roughness Sa of 1 µm or more and 10 µm or less.

## Description

### Technical Field

The present invention relates to a hydrophobic structure having hydrophobicity, a method for producing the hydrophobic structure, and a method for recovering hydrophobicity.

### Background Art

In living environments, manufacturing factories, agricultural fields, or other sites, water wetting or water-associated stains lead to not only deterioration in appearance but also decreased hygiene caused by propagation of microorganisms. To reduce the effect of water, the surfaces of articles are provided with superhydrophobicity. Superhydrophobicity is presented on the surfaces of hydrophobic materials having fine unevenness. Since superhydrophobicity is easily lost by friction or contamination, there is a need for a hydrophobic structure having a long-lasting effect.

So far, there has been a hydrophobic structure having a photocatalytic function (see Patent Literature 1). The hydrophobic structure of Patent Literature 1 exhibits a photocatalytic function upon exposure to predetermined light. The photocatalytic function decomposes and removes contaminants on the surface of the structure. The hydrophobic structure of Patent Literature 1 maintains high hydrophobicity such that a fresh surface (i.e., a surface having high hydrophobicity) is always exposed by decomposing and removing contaminants on the surface of the structure by using the photocatalytic function.

### Citation List

### Patent Literature

Patent Literature 1: Japanese Unexamined Patent Application Publication No. JP 2011- 162 672 A

### Summary of Invention

### Technical Problem

Since the decomposition rate of contaminants by the photocatalytic function of the hydrophobic structure of Patent Literature 1 is significantly low, the hydrophobicity may not always be maintained as expected.

The present invention has been made to solve the above problem and relates to a hydrophobic structure capable of maintaining superhydrophobicity for a long period of time, a method for producing the hydrophobic structure, and a method for recovering hydrophobicity.

### Solution to the Problem

A hydrophobic structure according to an embodiment of the present invention includes: a resin substrate; and a superhydrophobic mixture layer formed on the resin substrate and including a mixture of a hydrophobic part and a resin forming a surface portion of the resin substrate, wherein the hydrophobic part includes one or both of a fluororesin and hydrophobic fine particles formed by subjecting inorganic fine particles having an average particle size of 5 nm or more and 30 nm or less to a hydrophobic treatment, and the superhydrophobic mixture layer has a surface roughness Sa of 1 µm or more and 10 µm or less.

A method for producing a hydrophobic structure according to an embodiment of the present invention includes: attaching a hydrophobic part to a surface of a resin substrate; and polishing the surface of the resin substrate having the hydrophobic part attached thereto until the resin substrate has a surface roughness Sa of 1 µm or more and 10 µm or less, wherein the hydrophobic part includes one or both of a fluororesin and hydrophobic fine particles having an average particle size of 5 nm or more and 30 nm or less.

A method for recovering hydrophobicity according to an embodiment of the present invention is a method for recovering the hydrophobicity of a hydrophobic structure, wherein the hydrophobic structure includes: a resin substrate; and a superhydrophobic mixture layer formed on the resin substrate and including a mixture of a hydrophobic part and a resin forming a surface portion of the resin substrate, wherein the hydrophobic part includes one or both of a fluororesin and hydrophobic fine particles formed by subjecting inorganic fine particles having an average particle size of 5 nm or more and 30 nm or less to a hydrophobic treatment, and wherein the method includes polishing the surface of the hydrophobic structure so that the superhydrophobic mixture layer has a surface roughness Sa of 1 µm or more and 10 µm or less.

### Advantageous Effects of Invention

In embodiments of the present invention, the superhydrophobic mixture layer of the hydrophobic structure includes a mixture of a hydrophobic part and a resin forming a surface portion of the resin substrate, wherein the superhydrophobic mixture layer has a surface roughness Sa of 1 µm or more and 10 µm or less and has unevenness on its surface. This configuration allows the hydrophobic structure to maintain superhydrophobicity for a long period of time.

### Brief Description of Drawings

FIG. 1 is a schematic view for illustrating the concept of a method for producing a hydrophobic structure according to Embodiment 1.
FIG. 2 is a schematic view of a hydrophobic structure according to Embodiment 2.
FIG. 3 is a schematic view of a hydrophobic structure according to Embodiment 3.
FIG. 4 is a schematic view for illustrating a method for recovering superhydrophobicity according to Embodiment 5.

### Description of Embodiments

Embodiments of the present invention will be described below with reference to the drawings. In the drawings, any identical or corresponding parts will be assigned with the same reference characters, and description thereof will be appropriately omitted or simplified.

### Embodiment 1

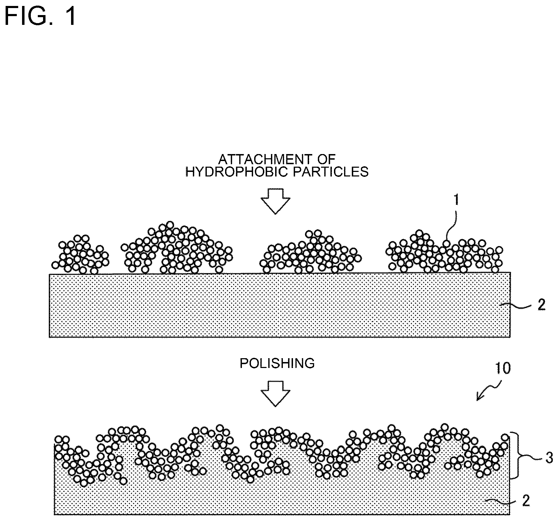

FIG. 1 is a schematic view for illustrating the concept of a method for producing a hydrophobic structure according to Embodiment 1.

A hydrophobic structure 10 has superhydrophobicity. The "superhydrophobicity" as used herein refers to high hydrophobicity with a contact angle of water of more than 130 degrees, or refers to a low sliding angle such that attached water droplets slide off at an inclination of 10 degrees or less. A surface with a low sliding angle is less subjected to water attachment and is easy to keep clean.

### Attaching Step

The upper section in FIG. 1 shows the attachment of hydrophobic fine particles 1, which serve as the hydrophobic part, to a resin substrate 2. The resin substrate 2 has hydrophobicity, but does not have superhydrophobicity. When the hydrophobic fine particles 1 in the form of aggregates are attached to the surface of the resin substrate 2, the resin substrate 2 has superhydrophobicity. The aggregates contain a binder resin and other components.

When the aggregates contain the binder resin and other components, the aggregates have sufficient strength, and the resin substrate 2 maintains superhydrophobicity even if rubbed and thus gains practicality. Conversely, the absence of the binder resin and other components in the aggregates fails to provide the aggregates with sufficient strength. The resin substrate 2 loses superhydrophobicity only when lightly rubbed and fails to gain practicality as a superhydrophobic surface.

### Polishing Step

The lower section in FIG. 1 shows that the surface of the resin substrate 2 is roughened by polishing the resin substrate 2 with a polishing cloth or other materials in the presence of the hydrophobic fine particles 1, in other words, with the hydrophobic fine particles 1 attached to the surface of the resin substrate 2. Unevenness is formed on the surface of the resin substrate 2 by using abrasive grains of the polishing cloth or other materials.

The polishing step involves repeatedly removing and detaching part of the surface portion of the resin substrate 2 by pushing countless abrasive grains against the surface of the resin substrate 2 to move the abrasive grains so that the surface portion of the resin substrate 2 plastically deforms. The surface portion of the resin substrate 2 plastically deforms with the hydrophobic fine particles 1 present in the surface portion. This forms, in the surface portion of the resin substrate 2, a superhydrophobic mixture layer 3 including a mixture of the hydrophobic fine particles 1 and the resin forming the resin substrate 2.

In other words, the hydrophobic structure 10 in which the surface portion of the resin substrate 2 is the superhydrophobic mixture layer 3 is formed. The phenomenon in which the hydrophobic fine particles 1 are mixed with the resin forming the resin substrate 2 can be understood as a mixing or kneading process only in the surface portion of the resin substrate.

The superhydrophobic mixture layer 3 thus includes a mixture of the hydrophobic fine particles 1 and the resin forming the resin substrate 2. The inner structure of the superhydrophobic mixture layer 3 changes depending on the type of resin forming the resin substrate 2 or the degree of polishing. The inner structure of the hydrophobic structure 10 having the superhydrophobic mixture layer 3 on its surface cannot be clearly determined, but the surface of the resin substrate 2 having complex surface unevenness formed by polishing is considered to be covered by the mixture of the hydrophobic fine particles 1 and the resin forming the resin substrate 2.

The mixture of the hydrophobic fine particles 1 and the resin forming the resin substrate 2 has nanoscale unevenness, and the resin substrate 2 has unevenness of from several hundred nanometers to more than ten micrometers on its surface. The thickness of the superhydrophobic mixture layer 3 corresponds to the surface roughness Sa defined in Embodiment 1.

The surface roughness Sa defined in Embodiment 1, which will be described below, is 1 µm or more and 10 µm or less. The superhydrophobic mixture layer 3 has rough unevenness of 1 µm or more and 10 µm or less, and the rough unevenness has nanoscale unevenness on its surface.

Even if the surface of the resin substrate 2 is polished in the absence of the hydrophobic fine particles 1, the resin substrate 2 itself having sufficiently high hydrophobicity can exhibit superhydrophobicity with a contact angle of water of more than 140 degrees. However, the superhydrophobic layer formed in this case is not the superhydrophobic mixture layer 3 but an uneven surface composed of the resin forming the resin substrate 2. For this, the uneven surface of the superhydrophobic layer is easily flattened by stimulation, such as friction, and the superhydrophobicity is lost in a short period of time.

Since the superhydrophobic mixture layer 3 of Embodiment 1 contains the mixture of the hydrophobic fine particles 1 and the resin forming the resin substrate 2, the exposure of the resin forming the resin substrate 2 on the surface and the formation of the flat surface are unlikely to occur even if deformation is caused by friction or other stimulation. As a result, superhydrophobicity is maintained for a long period of time. In other words, the superhydrophobicity of the superhydrophobic mixture layer 3 is unlikely to be degraded by stimulation, such as friction, or washing, or other processes.

If the hydrophobic fine particles 1 are simply attached to the surface of the resin substrate 2 in the absence of the superhydrophobic mixture layer 3, the hydrophobic fine particles 1 are easily detached by friction, washing, or other processes to eliminate superhydrophobicity. Since the hydrophobic fine particles 1 are mixed with the resin forming the resin substrate 2 in the superhydrophobic mixture layer 3, the detachment of the hydrophobic fine particles 1 is unlikely to occur, and superhydrophobicity is maintained.

The average particle size of primary particles of the hydrophobic fine particles 1 in Embodiment 1 is 5 nm or more and 30 nm or less, more preferably 10 nm or more and 25 nm or less. If the average particle size of primary particles of the hydrophobic fine particles 1 is less than 5 nm, it tends to be difficult to mix the hydrophobic fine particles 1 with the resin forming the resin substrate 2 during polishing.

If the average particle size is more than 30 nm, it is difficult to obtain superhydrophobicity, and the attached particles easily detach from the surface of the resin substrate 2, which is not preferred. When the average particle size of primary particles of the hydrophobic fine particles 1 in Embodiment 1 is 5 nm or more and 30 nm or less, the hydrophobic fine particles 1 are easily mixed with the resin forming the resin substrate 2 during polishing. In addition, the hydrophobic fine particles 1 are difficult to detach from the surface of the resin substrate 2, and superhydrophobicity can be maintained for a long period of time. The particle size in this case is determined with a laser diffraction-type analyzer.

The hydrophobic fine particles 1 are produced by subjecting inorganic fine particles to a hydrophobic treatment. The method for making inorganic fine particles hydrophobic is not limited but may involve causing fine particles to react with a reactant having an alkyl group or a fluorinated alkyl group bonded to a silanol group, a chlorosilane group, or a silazane group. This method is preferred because it provides highly stable hydrophobicity.

Another method for making inorganic fine particles hydrophobic may involve mixing inorganic fine particles with a silicone compound or fluorocarbon compound having a lower molecular weight than the above resin so that the silicone compound or fluorocarbon compound adsorbs on the surfaces of the inorganic fine particles. This method has an advantage that inexpensive materials can be used.

Hydrophobicity can be imparted more assuredly with heating at 100 °C or higher after mixing of the silicone compound or fluorocarbon compound with the inorganic fine particles. The inorganic fine particles can be made hydrophobic by reaction with the silicone compound or fluorocarbon compound while the inorganic fine particles are in a powder form, or can be made hydrophobic by mixing the inorganic fine particles with the reactant or the silicone compound or fluorocarbon compound in a solvent. In this case, hydrophobicity can be imparted more assuredly with heating after removal of the solvent.

The resin substrate 2 for forming the hydrophobic surface in Embodiment 1 may be made of, for example, various polyolefins, such as polypropylene, polyethylene, and polyvinyl chloride; acrylic resins or methacrylic resins, fluororesins, silicone resins, unsaturated polyester resins, vinyl ester resins, polystyrene, ABS resins, AS resins, saturated polyester resins, polyurethane resins, mixtures thereof, or copolymers thereof.

Polyolefins have an advantage that they have a highly flexible surface and can form a sufficiently rough surface when lightly polished. If the superhydrophobicity of polyolefins is degraded by friction or other causes, the superhydrophobicity can be easily recovered by using the method for recovering hydrophobicity described below in Embodiment 5. Polyolefins are thus suitable for use where superhydrophobicity is kept for a long time with periodic maintenance.

Acrylic resins or methacrylic resins are preferred because of its high surface harness, which makes the formed surface unevenness less likely to wear and highly resistant to friction. Acrylic resins or methacrylic resins also have an advantage that they are less susceptible to dents caused by impact, scratches, or other damages, and can be preferably used in locations where frequent maintenance is difficult.

Fluororesins and silicone resins are soft resins and thus can provide superhydrophobicity when lightly polished. Fluororesins and silicone resins have an advantage that these resins themselves have high hydrophobicity and can thus maintain high hydrophobicity even if superhydrophobicity is degraded by wear or other factors. Resins associated with curing reactions, such as unsaturated polyester resins and vinyl ester resins, have an advantage that these resins tend to form preferable surface unevenness when polished and the formed surface unevenness has high wear resistance.

The polishing of the resin substrate 2 in the presence of the hydrophobic fine particles 1 can use polishing materials with fixed abrasive grains, for example, polishing sheets, such as sandpaper including polishing materials on paper or cloth, or non-woven fabric polishing pad or polishing scrubber. Other polishing materials include polishing sponges including polishing materials on sponges, files on metal surfaces, and whetstones made by adhering abrasive grains with resin or other materials.

The size of the abrasive grains is selected such that the formed roughed surface has an appropriate surface roughness. For sandpapers and fabric files, the roughness of #240 or more and #40 or less is preferred. Steel wool or brushes may be used for polishing. Since the use of steel wool or brushes requires a large action of scraping off hydrophobic fine particles from the treatment surface, polishing at the same position within 10 seconds can form a superhydrophobic mixture layer.

Polishing is performed manually or with a power tool. The power tool is preferably, for example, one that moves a polishing material orbitally, such as orbital sanders, or reciprocally. Power tools that move a polishing material in one direction, such as belt sanders and disc sanders, may often fail to provide preferable superhydrophobicity because the cutting action of such power tools is too strong.

During polishing, the hydrophobic fine particles 1 need to be present on the surface of the resin substrate 2, that is, the work surface. Examples of the method for placing the hydrophobic fine particles 1 on the work surface include a method of sprinkling the hydrophobic fine particles 1 on the work surface before the polishing work and a method of supplying the hydrophobic fine particles 1 onto the work surface during the polishing work.

Both of these methods may be used. Examples of the method of supplying the hydrophobic fine particles 1 onto the work surface during the polishing work include a method of performing polishing with a polishing material having the hydrophobic fine particles attached thereto and a method of placing a small amount of the hydrophobic fine particles ahead in the polishing direction.

By using such methods, the hydrophobic fine particles 1 are attached to the work surface before polishing or during the polishing work. A small amount of the hydrophobic fine particles 1 added to the work surface is sufficient, and 0.1 g or more and 0.5 g or less of the hydrophobic fine particles 1 are preferably added per 100 cm² of the work surface.

The amount of the hydrophobic fine particles 1 added refers to the amount of the hydrophobic fine particles 1 sprinkled or supplied onto the work surface in order that the hydrophobic fine particles 1 are present on the work surface, and differs from the amount of the hydrophobic fine particles 1 attached to and remaining on the work surface.

If the amount of the hydrophobic fine particles 1 added is less than 0.1 g, superhydrophobicity may not be obtained. If the amount of the hydrophobic fine particles 1 added is more than 0.5 g, problems such as scattering of excess hydrophobic fine particles occur. Therefore, the amount of the hydrophobic fine particles 1 added to the work surface is preferably 0.1 g or more and 0.5 g or less per 100 cm² of the work surface.

The surface roughness of the resin substrate 2 after polishing is evaluated on the basis of Sa. The Sa is 1 µm or more and 10 µm or less, more preferably 1 µm or more and 5 µm or less. The Sa is determined as an arithmetic mean height used as a surface roughness. The roughness is preferably evaluated by using values determined by an optical technique, such as laser microscopy, after cleaning the polished surface by air blow or other methods.

If the Sa is less than 1 µm, the effect of unevenness in improving the resistance to friction is not sufficient. If the Sa is more than 10 µm, fine dust may intrude into the unevenness of the surface so that superhydrophobicity and cleanliness may tend to degrade. In the hydrophobic structure of Embodiment 1, the surface roughness Sa of the resin substrate 2 after polishing is 1 µm or more and 10 µm or less. The hydrophobic structure with this configuration has sufficient resistance to friction and can maintain superhydrophobicity and cleanliness for a long period of time.

As described above, the hydrophobic structure 10 of Embodiment 1 includes: the resin substrate 2; and the superhydrophobic mixture layer 3 formed on the resin substrate 2 and including a mixture of the hydrophobic part and the resin forming a surface portion of the resin substrate 2. The hydrophobic part includes hydrophobic fine particles formed by subjecting inorganic fine particles having an average particle size of 5 nm or more and 30 nm or less to a hydrophobic treatment.

The superhydrophobic mixture layer 3 has a surface roughness Sa of 1 µm or more and 10 µm or less. This configuration can provide the hydrophobic structure 10 capable of maintaining superhydrophobicity for a long period of time. This results in prevention of decrease in hygiene. The surface of the superhydrophobic mixture layer 3 is formed as the uneven surface of the resin and thus has high wear resistance.

The method for producing the hydrophobic structure of Embodiment 1 includes: an attaching step of attaching the hydrophobic part to the surface of the resin substrate; and a polishing step of polishing the surface of the resin substrate having the hydrophobic part attached thereto until the resin substrate has a surface roughness Sa of 1 µm or more and 10 µm or less. The hydrophobic part includes hydrophobic fine particles having an average particle size of 5 nm or more and 30 nm or less.

This configuration can provide the hydrophobic structure capable of maintaining superhydrophobicity for a long period of time. This results in prevention of decrease in hygiene. The hydrophobic structure having hydrophobicity can be obtained by a simple treatment, such as rubbing with sandpaper, without a need of a special coating and treatment, and can thus be produced with low costs. The superhydrophobic surface obtained by this production method is formed as the uneven surface of the resin finished by a polishing process and thus has high wear resistance.

### Embodiment 2

In Embodiment 1 described above, hydrophobic fine particles are used as the hydrophobic part to be attached to the surface of the resin substrate 2. In Embodiment 2, a fluororesin is used. Specifically, in Embodiment 2, a superhydrophobic mixture layer is formed by the same treatment as in Embodiment 1 using a fluororesin powder. Hereinafter, the points of Embodiment 2 different from Embodiment 1 will be mainly described, and the components not described in Embodiment 2 are the same as those in Embodiment 1.

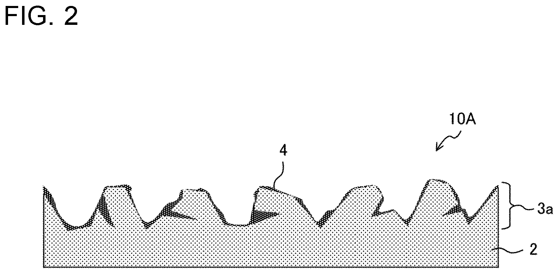

FIG. 2 is a schematic view of a hydrophobic structure according to Embodiment 2. FIG. 2 corresponds to the lower section of FIG. 1 in Embodiment 1.

A hydrophobic structure 10A illustrated in FIG. 2 has a superhydrophobic mixture layer 3a formed by polishing the resin substrate 2 in the presence of a powdery fluororesin 4. The superhydrophobic mixture layer 3a includes a mixture of the fluororesin 4 and the resin forming the resin substrate 2. The fluororesin 4 and the resin forming the resin substrate 2 are not mixed with each other at the molecular level.

In the superhydrophobic mixture layer 3a, the surface of the resin substrate 2 having complex surface unevenness formed by polishing is considered to be covered by the fluororesin 4. The resin substrate 2 may be one described in Embodiment 1. Polishing can also be performed by the method described in Embodiment 1.

In this example, the superhydrophobic mixture layer 3a is formed by using the fluororesin 4 in a powder form. However, the fluororesin 4 is not limited to a powder form. The particle size of the fluororesin 4 in a powder form is not limited, but is larger than the particle size of the hydrophobic fine particles 1 in Embodiment 1. There is thus an advantage in less dust scattering during polishing.

The hydrophobic structure 10A of Embodiment 2 has superhydrophobicity based on the high hydrophobicity of the fluororesin 4. Since the hydrophobic structure 10A also has an effect of suppressing oil adhesion based on the oil repellency of the fluororesin 4, the hydrophobic structure 10A can repel oil and other substances on the surface and easily maintain superhydrophobicity.

The thickness of the superhydrophobic mixture layer 3a corresponds to the surface roughness Sa defined in Embodiment 2. The surface roughness Sa defined in Embodiment 2 is preferably 1 µm or more and 10 µm or less, more preferably 1 µm or more and 5 µm or less, as in Embodiment 1. The superhydrophobic mixture layer 3a forms rough unevenness of about 1 µm to about 10 µm, and the surface of the rough unevenness is covered by the fluororesin 4.

Examples of the fluororesin include PTFE (polytetrafluoroethylene), PFA (tetrafluoroethylene-perfluoroalkyl vinyl ether copolymer), CTFE (polychlorotrifluoroethylene), PVF (polyvinyl fluoride), ETFE (ethylene-tetrafluoroethylene copolymer), FEP (perfluoroethylene-propylene copolymer), ECTFE (ethylene-chlorotrifluoroethylene copolymer), PCTFE (polychlorotrifluoroethylene), TFE/PDD (tetrafluoroethylene-perfluoro dioxole copolymer), and mixtures thereof.

A small amount of the fluororesin 4 added to the work surface is sufficient, and 0.1 g or more and 0.5 g or less of the fluororesin 4 is preferably added per 100 cm² of the work surface. If the amount of the fluororesin 4 added is less than 0.1 g, superhydrophobicity may not be obtained. If the amount of the fluororesin 4 added is more than 0.5 g, problems such as scattering of excess powder occur. Therefore, the amount of the fluororesin 4 added is preferably 0.1 g or more and 0.5 g or less per 100 cm² of the work surface.

As described above, Embodiment 2 has the same advantageous effect as Embodiment 1 and also has an advantage that dust scattering during polishing is reduced by using the fluororesin 4 as the hydrophobic part. Embodiment 2 also has an advantage that the lubricity of the fluororesin 4 reduces the wear of the resin substrate 2 and extends the life of a polishing material.

The superhydrophobic mixture layer 3a including the resin forming the resin substrate 2 and the fluororesin 4 is formed on the surface by performing polishing in the presence of the fluororesin 4 during production. The resin forming the resin substrate 2 in the superhydrophobic mixture layer 3a is covered by the fluororesin 4, and the superhydrophobic mixture layer 3a exhibits stable superhydrophobicity and also has functions of the oil repellency and solvent resistance of the fluororesin 4 or other functions. The superhydrophobic mixture layer 3a also provides a cleaning action in case of oil adhesion or other cases because of the oil repellency of the fluororesin 4.

### Embodiment 3

In Embodiment 3, a superhydrophobic mixture layer is formed by performing polishing in the presence of both superhydrophobic fine particles and a fluororesin. Hereinafter, the points of Embodiment 3 different from Embodiment 1 and Embodiment 2 will be mainly described, and the components not described in Embodiment 3 are the same as those in Embodiment 1 and Embodiment 2.

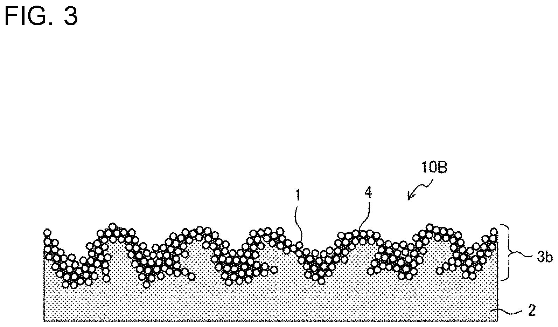

FIG. 3 is a schematic view of a hydrophobic structure according to Embodiment 3. FIG. 3 corresponds to the lower section of FIG. 1 in Embodiment 1.

A hydrophobic structure 10B illustrated in FIG. 3 has a superhydrophobic mixture layer 3b formed by polishing a resin substrate 2 in the presence of both hydrophobic fine particles 1 and a fluororesin 4. In the superhydrophobic mixture layer 3b, the surface of the resin substrate 2 having complex surface unevenness formed by polishing is considered to be covered by a mixture of the hydrophobic fine particles 1 and the fluororesin 4. Such a configuration is formed because the fluororesin 4 is softer than the resin substrate 2 and unlikely to mix with the resin substrate 2.

The mixture of the fluororesin 4 and the hydrophobic fine particles 1 has nanoscale unevenness, and the resin substrate 2 has unevenness of from several hundred nanometers to more than ten micrometers. The thickness of the superhydrophobic mixture layer 3b corresponds to the surface roughness Sa defined in Embodiment 3. The surface roughness Sa defined in Embodiment 3 is preferably 1 µm or more and 10 µm or less, more preferably 1 µm or more and 5 µm or less, as in Embodiment 1. The superhydrophobic mixture layer 3b forms rough unevenness of about 1 µm to about 10 µm, and the surface of the rough unevenness has nanoscale unevenness.

The hydrophobic fine particles 1 in the superhydrophobic mixture layer 3b are less likely to fall off with friction or other causes than those in the superhydrophobic mixture layer 3 formed by using the hydrophobic fine particles 1 in Embodiment 1. The following may be the reason for this. The mixture of the hydrophobic fine particles 1 and the fluororesin 4 is considered to be more uniform than the mixture of the hydrophobic fine particles 1 and the resin substrate 2 of Embodiment 1 because the fluororesin 4 is softer than the resin substrate 2.

The superhydrophobic mixture layer 3b has an advantage that the surface of the resin substrate 2 is unlikely to be exposed even if the surface of the superhydrophobic mixture layer 3b is worn, and the remaining fluororesin 4 makes it easier for the superhydrophobic mixture layer 3b to maintain superhydrophobicity than the superhydrophobic mixture layer 3a of Embodiment 1. In addition, oil repellency may be obtained from the fluororesin 4.

Advantageously, the superhydrophobic mixture layer 3b has higher superhydrophobicity than the superhydrophobic mixture layer 3a according to Embodiment 2 formed by using the fluororesin 4 because of fine unevenness of the mixture of the hydrophobic fine particles 1 and the fluororesin 4.

Polishing can be performed by the method described in Embodiment 1. The hydrophobic fine particles 1, the resin substrate 2, and the fluororesin 4 are those described in Embodiments 1 and 2. The ratio of the fluororesin 4 to the hydrophobic fine particles 1 is preferably 30 % or more and 300 % or less, more preferably 50 % or more and 200 % or less, by weight ratio.

If the ratio of the fluororesin 4 to the hydrophobic fine particles 1 is 30 % or less, the mixture of the hydrophobic fine particles 1 and the fluororesin 4 tends to peel off the surface of the resin substrate 2.

If the ratio of the fluororesin 4 to the hydrophobic fine particles 1 is more than 300 %, the hydrophobic fine particles 1 has a small effect on formation of fine unevenness, and there is no difference between the case of the mixture of the fluororesin 4 and the hydrophobic fine particles 1 and the case of the fluororesin alone. Therefore, the ratio of the fluororesin 4 to the hydrophobic fine particles 1 is preferably 30 % or more and 300 % or less by weight ratio.

The hydrophobic fine particles 1 and the fluororesin 4 may be a mixture of a powder of the hydrophobic fine particles 1 and a powder of the fluororesin 4, or may be a mixture prepared in advance using a solvent or other materials. The use of a mixture prepared in advance using a solvent or other materials can prevent or reduce dust scattering during the polishing process, compared with the case of using a powder or granules of the mixture.

A small amount of the hydrophobic fine particles 1 and the fluororesin 4 added to the work surface is sufficient, and 0.1 g or more and 0.5 g or less of the hydrophobic fine particles 1 and the fluororesin 4 are preferably added per 100 cm² of the work surface. If the amount of the hydrophobic fine particles 1 and the fluororesin 4 added is less than 0.1 g, superhydrophobicity may not be obtained. If the amount of the hydrophobic fine particles 1 and the fluororesin 4 added is more than 0.5 g, problems such as scattering of excess powder occur.

As described above, Embodiment 3 has the same advantageous effect as Embodiment 1 and further has the following advantageous effect by using both the hydrophobic fine particles 1 and the fluororesin 4 as the hydrophobic part. The superhydrophobic mixture layer 3b formed by using the hydrophobic fine particles 1 and the fluororesin 4 has an advantage that the exposure of the surface of the resin substrate 2 due to surface wear is unlikely to occur, and the remaining fluororesin 4 makes it easier to maintain superhydrophobicity.

The superhydrophobic mixture layer 3b including a mixture of the resin forming the resin substrate 2, the fluororesin 4, and the hydrophobic fine particles 1 is formed by performing polishing in the presence of both the hydrophobic fine particles 1 and the fluororesin 4 during production. In the superhydrophobic mixture layer 3b, the resin forming the resin substrate 2 is covered by a mixture of the fluororesin 4 and the hydrophobic fine particles 1.

The superhydrophobic mixture layer 3b is more difficult to peel off than the superhydrophobic mixture layer 3 of Embodiment 1 produced by using only the hydrophobic fine particles 1 and has better superhydrophobicity than the superhydrophobic mixture layer 3a of Embodiment 2 produced by using only the fluororesin 4.

### Embodiment 4

In Embodiments 1 to 3, a method for applying the hydrophobic part in a powder form to the resin substrate 2 is used. In Embodiment 4, a method for applying the hydrophobic part in a liquid form to the resin substrate 2 is used. Hereinafter, the points of Embodiment 4 different from Embodiments 1 to 3 will be mainly described, and the components not described in Embodiment 4 are the same as those in Embodiments 1 to 3.

Specifically, the application method in a liquid form refers to an application method using a dispersion of the hydrophobic part in a solvent or a solution of the hydrophobic part in a solvent. The use of the application method using a solution can prevent or reduce dust scattering and provides an effect of imparting superhydrophobicity with a small amount of the hydrophobic part. After application of the solution to the resin substrate 2, the liquid is dried until no solvent component remains, followed by polishing.

In the case of using the hydrophobic fine particles 1 as the hydrophobic part, the hydrophobic fine particles 1 are not dissolved in a solvent and thus used as a dispersion of the hydrophobic part in a solvent. Preferably, no large aggregates or clumps of the hydrophobic fine particles 1 are present in the dispersion. The aggregates as used herein refer to the mass of the hydrophobic fine particles 1 impregnated with the solvent, and the clumps as used herein refer to the mass of the hydrophobic fine particles 1 not impregnated with the solvent.

Preferably, the dispersion is free of aggregates or clumps having diameters of 1.0 mm or more. More preferably, the dispersion is free of aggregates or clumps having diameters of 0.5 mm or more. The aggregates or clumps of more than 1.0 mm are easy to peel off the resin substrate 2 after drying and reduce the advantageous effect obtained by application using a solvent, which is not preferred.

Since the hydrophobic fine particles 1 have particle sizes as small as 5 nm or more and 30 nm or less as described above, the hydrophobic fine particles 1 tend to form aggregates when dispersed in a solvent. The aggregation of the hydrophobic fine particles 1 is reduced by subjecting a dispersion containing the hydrophobic fine particles 1 to a dispersion treatment. The use of the dispersion that has been subjected to the dispersion treatment allows the hydrophobic fine particles 1 to form a thin film in close contact with the surface of the resin substrate 2 after application and drying of the dispersion.

Even if a dispersion containing aggregates of the hydrophobic fine particles is used without any treatment, the effect of preventing or reducing dust scattering and improving the efficiency of imparting superhydrophobicity is obtained. However, the hydrophobic fine particles 1 on the surface form a rough film, which is easy to peel off during polishing and tends to lead to loss of the hydrophobic fine particles 1 and the fluororesin and dust generation, compared with the case of using a dispersion that has been subjected to a dispersion treatment.

Therefore, a dispersion that has been subjected to a dispersion treatment is preferably used. The dispersion treatment in this case uses a bead mill, an ultrasonic disperser, a high-speed shear mixer, or other devices. Methods using a colloid mill, a high-pressure homogenizer, or other devices in which a dispersion passes through a treatment section are particularly preferred because the aggregates are less likely to remain.

In the case of using the fluororesin 4 as the hydrophobic part, there is a method for applying a solution prepared by dispersing the fluororesin 4 in a solvent that does not dissolve the fluororesin 4 and subjecting the resulting dispersion to the same dispersion treatment as that for the hydrophobic fine particles 1. Application of a solution prepared by using a solvent that dissolves the fluororesin 4 is also preferred. The application of the solution can more assuredly provide an effect of preventing or reducing dust scattering and improving the efficiency of imparting superhydrophobicity.

In the case of using both the hydrophobic fine particles 1 and the fluororesin 4 as the hydrophobic part, the fluororesin itself having a solution form provides not only an effect of preventing or reducing dust scattering and improving the efficiency of imparting superhydrophobicity but also an effect of improving the quality of the superhydrophobic mixture layer formed by using the hydrophobic part to prevent or reduce degradation caused by peeling and friction.

The solvent used in Embodiment 4 needs to have good compatibility with the hydrophobic fine particles 1 and the fluororesin 4 in the hydrophobic part. Solvents that dissolve resins, including aromatic hydrocarbon solvents, ketones, such as acetone, methyl ethyl ketone, and MIBK, ethers, such as tetrahydrofuran, esters, such as ethyl lactate, ethyl acetate, and butyl acetate, and N-methylpyrrolidone have an effect of improving close contact of the surface of the resin substrate with the hydrophobic fine particles 1 and the fluororesin to facilitate formation of the superhydrophobic mixture layer.

As long as the surface of the resin substrate contains a solvent during polishing, the hydrophobic mixture layer can be formed by polishing with a force reduced by the softness of the resin surface, and dust scattering can also be prevented or reduced, compared with the case where the resin substrate has a dry surface.

Solvents that do not dissolve resins, including naphthenic or paraffinic hydrocarbon solvents, alcohols, such as ethanol or 2-propanol, ethers, such as dimethyl ether or diethyl ether, and various fluororesin solvents, do not have an effect of softening the surface of the resin substrate. The use of solvents that do not dissolve the resin requires polishing with the same force as that in the case of no application using solvents but can shorten the drying time and enables a short-time treatment compared with the case of using solvents that dissolve the resin. The use of excess of solvents that dissolve the resin may degrade the resin, but the use of solvents that do not dissolve the resin eliminates such a risk.

The amount of the hydrophobic part added in the solvent during application is preferably 0.1 mass% or more and 5.0 mass% or less, more preferably 0.5 mass% or more and 3.0 mass% or less. If the amount of the hydrophobic part added is less than 0.1 mass%, the amount of the attached hydrophobic part is too small to provide good superhydrophobicity. If the amount of the hydrophobic part added is more than 5.0 mass%, the amount of the attached hydrophobic part is so large that dust generation increases during polishing or other processes, which is not preferred. Thus, the amount of the hydrophobic part added in the solvent during application is preferably 0.1 mass% or more and 5.0 mass% or less.

The method of applying a solution in which the hydrophobic part is dispersed or dissolved is not limited, but brush application, roller application, or spray application can be used for application to the flat resin substrate 2. The application to a roughened surface during a retreatment or other processes may use, in addition to these application methods, a non-woven fabric or sponge impregnated with the solution.

An application method using a non-woven fabric or sponge impregnated with the solution is suitable for routine maintenance works or other works because it involves a significantly simple work with high safety. After application, the liquid is dried until no solvent component remains, followed by polishing. Drying may be natural drying or may be accelerated by exposure to heat or wind.

There is also a method of facilitating the polishing work by raising the temperature of the surface of the resin substrate with heat during drying. The optimum temperature differs depending on the type of resin, but the substrate surface temperature determined with a radiation thermometer is preferably 40 °C or higher and 150 °C or lower, more preferably 50 °C or higher and 110 °C or lower. Since the temperature rise softens the resin surface, the superhydrophobic mixture layer can be formed by polishing with a weak force, which enables a short-time treatment with less dust generation.

If the substrate surface temperature is lower than 40 °C, there is almost no difference from the work at room temperature. If the substrate surface temperature is higher than 150 °C, the resin substrate may deform, which is not preferred. Before the polishing work, the temperature of the resin substrate surface is preferably 40 °C or higher and 150 °C or lower.

A small amount of the hydrophobic part added to the work surface is sufficient, and the weight after drying is preferably 0.05 g or more and 0.5 g or less per 100 cm² of the work surface. If the amount of the attached hydrophobic part is less than 0.05 g, superhydrophobicity may not be obtained. If the amount of the attached hydrophobic part is more than 0.5 g, problems such as scattering of excess powder occur.

As described above, Embodiment 4 has the same advantageous effect as Embodiments 1 to 3 and further has the following advantageous effect because the hydrophobic part in a liquid form is applied to the resin substrate 2. The attachment of the hydrophobic part in a liquid form to the resin substrate 2 can prevent or reduce dust generation during polishing. The hydrophobic part can thus be applied to a place where dust scattering is problematic. Compared with the attachment of the hydrophobic part in a powder form to the resin substrate 2, the hydrophobic part in a liquid form can be stably supplied onto the work surface, which can reduce the amount of the hydrophobic part used and can improve the attachment efficiency.

### Embodiment 5

The hydrophobic structures formed in Embodiments 1 to 4 are less subject to degradation in superhydrophobicity when exposed to friction and contamination as described above and can maintain superhydrophobicity for a long period of time. However, the superhydrophobicity may degrade after a long period of time. Embodiment 5 relates to a method for recovering superhydrophobicity with a simple treatment.

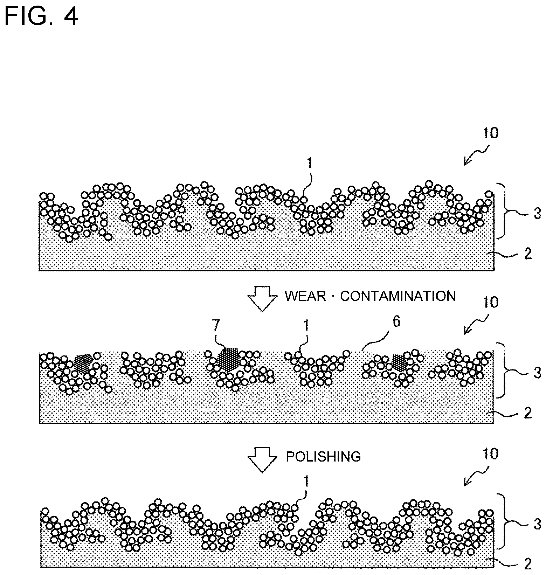

FIG. 4 is a schematic view for illustrating a method for recovering superhydrophobicity according to Embodiment 5.

The upper section in FIG. 4 shows that superhydrophobicity is maintained on the surface of the hydrophobic structure 10. Referring to the middle section in FIG. 4, application of repeated friction or strong-force friction to the hydrophobic structure 10 in this state causes wearing of protrusions on the surface of the superhydrophobic mixture layer 3 to remove the hydrophobic fine particles 1 on the surface so that the surface of the resin substrate 2 is exposed to form an exposed surface 6.

Alternatively, contaminant deposits 7 are attached to recesses on the surface of the hydrophobic structure by friction or other forces. In this state, the hydrophobic structure has degraded superhydrophobicity. Water is attached to the exposed surface 6 with degraded superhydrophobicity or on the contaminant deposits 7. When water is attached to the exposed surface 6 or on the contaminant deposits 7, the water is fixedly positioned without spreading on the surface in a wet manner or rolling in the form of water droplets to hinder the purpose of improving hygiene.

The method for recovering superhydrophobicity of Embodiment 5 involves polishing the surface with superhydrophobicity degraded in this manner. By polishing, the surface roughness Sa of the superhydrophobic mixture layer 3 is fallen in the range of 1 µm or more and 10 µm or less again. This polishing recovers superhydrophobicity. With superhydrophobicity degraded, the hydrophobic fine particles 1 remain on the surface of the hydrophobic structure 10, and polishing causes the hydrophobic fine particles to cover the entire surface again and thus regenerates the superhydrophobic mixture layer 3.

In other words, the superhydrophobicity of the hydrophobic structure 10 can be recovered. The lower section in FIG. 4 shows that the superhydrophobicity of the hydrophobic structure 10 is recovered again by polishing. The contaminant deposits 7 are detached during polishing, incorporated into the resin substrate 2, or covered by the hydrophobic fine particles 1. As a result, the inhibition of superhydrophobicity by the contaminant deposits 7 is eliminated. The polishing method may be the same as that described in Embodiment 1.

A method for recovering superhydrophobicity known in the related art involves, for example, reapplying a coating agent onto an undercoat layer containing spherical particles to form a topcoat layer containing inorganic fine particles and a hydrophobic resin. The reapplication of the coating agent increases the thickness of the topcoat layer to degrade the layer quality. In addition, the reapplication of the coating agent after peeling of an existing topcoat layer has a problem of high costs and efforts.

Since the surface with superhydrophobicity degraded by friction and contamination is only polished in the method for recovering superhydrophobicity of Embodiment 5, superhydrophobicity can be recovered to the initial state very easily and inexpensively. The method for recovering superhydrophobicity of Embodiment 5 is low in cost because of no need of a pretreatment, such as peeling or washing.

The method for recovering superhydrophobicity of Embodiment 5 may involve a simple polishing treatment or may involve a polishing treatment with addition of the hydrophobic fine particles 1. The polishing treatment with addition of the hydrophobic fine particles 1 enables repeated stable recovery of superhydrophobicity.

The method for recovering the superhydrophobicity of the superhydrophobic mixture layer 3 of Embodiment 1 is described above, but the same method applies to the superhydrophobic mixture layers 3a and 3b of Embodiments 2 and 3.

### EXAMPLES

### Examples 1 to 4, Comparative Examples 1 to 5

A flat plate, 100 mm × 100 mm, 1 mm in thickness, was used as a resin substrate. Hydrophobic fine particles were used as the hydrophobic part. Hydrophobic fumed silica R972V (available from NIPPON AEROSIL CO., LTD.) with an average primary particle size of 7 nm was used as the hydrophobic fine particles 1. The hydrophobic fine particles 1 (0.2 g) were sprinkled on the flat plate, and the flat plate was polished with sandpaper attached to an orbital sander. The superhydrophobicity was evaluated on the basis of the sliding angle.

A water droplet was placed on the resin substrate, and the resin substrate was inclined to measure the angle at which the water droplet slid down. The resistant to friction was evaluated by rubbing the resin substrate with a wiper 50 times at a pressure of about 80 g/cm² and determining changes in sliding angle. The wiper was a JK wiper (registered trade mark: available from Nippon Paper Crecia Co., Ltd.).

**Table 1**

| | Substrate resin | Polishing material | Surface roughness Sa | Initial sliding angle | Post-friction sliding angle |
|---|---|---|---|---|---|
| Example 1 | polypropylene | #60 | 5.2 µm | 5 degrees or less | 5 degrees or less |
| Example 2 | polypropylene | #240 | 2.1 µm | 5 degrees or less | 5 degrees or less |
| Comparative Example 1 | polypropylene | without polishing | 0.01 µm | 60 degrees | 60 degrees |
| Comparative Example 2 | polypropylene | #400 | 0.6 µm | 10 degrees | 50 degrees |
| Comparative Example 3 | polypropylene | #40 | 12 µm | 20 degrees | 20 degrees |
| Example 3 | PMMA | #240 | 1.5 µm | 5 degrees or less | 10 degrees |
| Comparative Example 4 | PMMA | #400 | 0.2 µm | 20 degrees | 50 degrees |
| Comparative Example 5 | PMMA | #40 | 11 µm | 20 degrees | 20 degrees |
| Example 4 | PTFE | #240 | 2.0 µm | 5 degrees or less | 5 degrees or less |

Table 1 summarizes the evaluation results under the conditions of different combinations of the resin substrate and the grit size of sandpaper used for polishing. In Comparative Example 1 without polishing, the initial sliding angle is 60 degrees, that is, a water droplet slides down when the resin substrate is inclined at 60 degrees, which indicates that the resin substrate has no superhydrophobicity. In Examples 1 to 4, the initial sliding angle is 5 degrees or less, and a water droplet slides down even when the resin substrate is slightly inclined, which indicates that the resin substrate has superhydrophobicity. In Examples 1 to 4, the post-friction sliding angle is 10 degrees or less after friction, which indicates that the resin substrate maintains superhydrophobicity.

In Comparative Examples 2 and 4, the initial sliding angle is significantly lowered by polishing compared with Comparative Example 1 without polishing, but superhydrophobicity is poorer than that in Examples. In Comparative Examples 2 and 4, the post-friction sliding angle is 50 degrees, and the sliding angle is significantly increased by friction, and no wear resistance is obtained. This is because the surface roughness Sa is less than 1 µm, which is not large enough.

In Comparative Examples 3 and 5, the initial sliding angle is significantly lowered by polishing compared with Comparative Example 1 without polishing, and the sliding angle is not changed by friction, but superhydrophobicity is poorer than that in Examples. This is because the surface roughness Sa is more than 10 µm, which is too large, and a water droplet is less likely to slide down.

It is thus found that a hydrophobic structure with friction durability can be formed when the surface roughness Sa is appropriately increased to 1 µm or more and 10 µm or less by polishing.

### Examples 5 to 8, Comparative Examples 6 to 9

Under the same experimental conditions as those in Example 1, the evaluation was performed by using Dyneon (registered trademark) PTFE Micropowder TF9201Z (available from 3M Japan Limited), which is a powdery fluororesin, as a hydrophobic part.

**Table 2**

| | Substrate resin | Polishing material | Surface roughness Sa | Initial sliding angle | Post-friction sliding angle |
|---|---|---|---|---|---|
| Example 5 | polypropylene | #60 | 4.8 µm | 5 degrees or less | 5 degrees or less |
| Example 6 | polypropylene | #240 | 1.8 µm | 5 degrees or less | 5 degrees or less |
| Comparative Example 6 | polypropylene | without polishing | 0.01 µm | 50 degrees | 60 degrees |
| Comparative Example 7 | polypropylene | #400 | 0.4 µm | 20 degrees | 50 degrees |
| Comparative Example 8 | polypropylene | #40 | 11 µm | 20 degrees | 20 degrees |
| Example 7 | PMMA | #240 | 1.1 µm | 5 degrees or less | 10 degrees |
| Comparative Example 9 | PMMA | #400 | 0.1 µm | 20 degrees | 50 degrees |
| Example 8 | PTFE | #240 | 2.0 µm | 5 degrees or less | 5 degrees or less |

Table 2 summarizes the evaluation results under the conditions of different combinations of the resin substrate and the grit size of sandpaper, as in Table 1. In Examples 5 to 8, the initial sliding angle is 5 degrees or less, and a water droplet slides down even when the resin substrate is only slightly inclined, which indicates that the resin substrate has high superhydrophobicity.
In Examples 5 to 8, the post-friction sliding angle is 10 degrees or less after friction, which indicates that the resin substrate maintains superhydrophobicity.

In Comparative Example 6 without polishing, a water droplet does not slide down even when the resin substrate is inclined at 50 degrees, and no superhydrophobicity is obtained. In Comparative Examples 7 and 9, the initial sliding angle is significantly lowered by polishing compared with Comparative Example 6 without polishing, but superhydrophobicity is poorer than that in Examples.

In Comparative Examples 7 and 9, the post-friction sliding angle is 50 degrees, and the sliding angle is significantly increased by friction, and no wear resistance is obtained. This is because the surface roughness Sa is less than 1 µm, which is not large enough.

In Comparative Example 8, the initial sliding angle and the post-friction sliding angle are both lowered, but superhydrophobicity is poorer than that in Examples. This is because the surface roughness Sa is more than 10 µ, which is too large, and a water droplet is less likely to slide down.

It is thus found that a hydrophobic structure with friction durability can be formed when the surface roughness Sa is appropriately increased to 1 µm or more and 10 µm or less by polishing.

### Examples 9 to 12 and Comparative Examples 10 and 11

Under the same experimental conditions as those in Examples 1 and 5, the evaluation was performed by using a mixture of equivalent weights of hydrophobic fine particles and a fluororesin as a hydrophobic part.

**Table 3**

| | Substrate resin | Polishing material | Surface roughness Sa | Initial sliding angle | Post-friction sliding angle |
|---|---|---|---|---|---|
| Example 9 | polypropylene | #60 | 4.9 µm | 5 degrees or less | 5 degrees or less |
| Example 10 | polypropylene | #240 | 1.8 µm | 5 degrees or less | 5 degrees or less |
| Comparative Example 10 | polypropylene | #400 | 0.6 µm | 10 degrees | 30 degrees |
| Example 11 | PMMA | #240 | 1.5 µm | 5 degrees or less | 5 degrees or less |
| Comparative Example 11 | PMMA | #400 | 0.3 µm | 20 degrees | 30 degrees |
| Example 12 | PTFE | #240 | 2.8 µm | 5 degrees or less | 5 degrees or less |

Table 3 summarizes evaluation results. In Examples 9 to 12, the initial sliding angle and the post-friction sliding angle are both 5 degrees or less, and high superhydrophobicity with wear resistance is obtained. In Comparative Examples 10 and 11, the initial sliding angles without polishing are 60 degrees and 75 degrees (not shown in Table), and the initial sliding angle is significantly lowered by polishing, but superhydrophobicity is poorer than that in Examples.

It is thus found that a hydrophobic structure with friction durability can be formed when the surface roughness Sa is increased by polishing.

### Examples 13 to 14 and Comparative Example 12

In Examples 13 and 14, a mixture of equivalent weights of hydrophobic fine particles and a fluororesin was dispersed in a hydrocarbon solvent to form a 20 wt% dispersion, and the dispersion was attached to the resin substrate by spray application and drying. The hydrocarbon solvent was Mineral Spirit A (registered trademark: available from ENEOS Corporation).

In Comparative Example 12, a powder of a mixture of equivalent weights of hydrophobic fine particles and a fluororesin was attached to the resin substrate while it was in a powder form. In Examples 13 and 14 and Comparative Example 12, a PMMA plate was used as the resin substrate. The same evaluation as in Example 1 was performed.

**Table 4**

| | Application method Amount of attached hydrophobic part (per 100 cm²) | Polishing material | Surface roughness Sa | Initial sliding angle | Post-friction sliding angle |
|---|---|---|---|---|---|
| Comparative Example 12 | powder application 0.05 g | | 1.9 µm | 30 degrees | 30 degrees |
| Example 10 | powder application 0.2 g | #240 | 1.8 µm | 5 degrees or less | 5 degrees or less |
| Example 13 | solution application 0.05 g | #240 | 1.8 µm | 5 degrees or less | 5 degrees or less |
| Example 14 | solution application 0.2 g | #240 | 1.7 µm | 5 degrees or less | 5 degrees or less |

| | | | | | |
|---|---|---|---|---|---|
| Note: Example 10 is the same as that in Table 3. | | | | | |

Table 4 summarizes evaluation results. In Comparative Example 12, the amount of the attached hydrophobic part is too small to provide superhydrophobicity. In Examples 13 to 14, the initial sliding angle and the post-friction sliding angle are both 5 degrees or less, and high superhydrophobicity with wear resistance is obtained.

It is thus found that, when the hydrophobic fine particles 1 and the fluororesin 4 are attached to the resin substrate by application of the dispersion, a superhydrophobic surface with friction durability can be formed with a very small amount of attachment.

### Examples 15 to 17

### Differences in Resistance Depending on Attached Material During Polishing

In Examples 15 to 17, the resistance to soap solutions was evaluated. Examples 15, 16, and 17 were respectively compared with Example 2 in which hydrophobic fine particles were attached to a resin substrate, Example 10 in which a fluororesin was attached to a resin substrate, and Example 14 in which hydrophobic fine particles and a fluororesin were attached to a resin substrate. Samples made superhydrophobic by polishing were lightly washed with hand soap, and the sliding angle was measured on the samples after the samples were washed with water and after the samples were further sprayed with high-pressure water spray after washed with water.

**Table 5**

| | Hydrophobic structure | Hydrophobic part (attached material) | Post-friction sliding angle | Sliding angle after washing with soap solution | Sliding angle after exposure to spray |
|---|---|---|---|---|---|
| Example 15 | Example 2 | hydrophobic fine particles | 5 degrees or less | 40 degrees | 30 degrees |
| Example 16 | Example 10 | fluororesin | 5 degrees or less | 5 degrees or less | 10 degrees |
| Example 17 | Example 14 | mixture | 5 degrees or less | 20 degrees | 5 degrees or less |

Table 5 summarizes evaluation results. In Example 15, high hydrophobicity but not superhydrophobicity is maintained both after washing with a soap solution and after exposure to high-pressure spray. In Example 16, superhydrophobicity is sufficiently maintained even after washing with a soap solution. This is because of the effect of the oil repellency of the fluororesin. In Example 16, the sliding angle was changed to 10 degrees after exposure to high-pressure spray, and superhydrophobicity after exposure to high-pressure spray is slightly lower than that before exposure to high-pressure spray. However, the superhydrophobicity is recovered after sufficient drying of the sample.

Therefore, decreased superhydrophobicity after exposure to high-pressure spray is not caused by deterioration of the superhydrophobic mixture layer but caused by intrusion of water into voids in the superhydrophobic mixture layer due to insufficient hydrophobicity of the fluororesin covering the uneven surface of the resin substrate.

In Example 17, high superhydrophobicity is obtained even after exposure to high-pressure spray. This is because the inner surface of the superhydrophobic mixture layer is covered by the mixture of the hydrophobic fine particles and the fluororesin, which is not difficult to peel off.

### Examples 18 to 20

### Recovery of Superhydrophobicity by Repolishing

In Examples 18 to 20, samples after washing with soap solutions and exposure to high-pressure spray were used to evaluate the recovery of superhydrophobicity by polishing.

**Table 6**

| | Hydrophobic structure | Hydrophobic part (attached material) | Sliding angle after repolishing of soap solution-washed sample | Sliding angle after repolishing of spray-exposed sample |
|---|---|---|---|---|
| Example 18 | Example 2 | hydrophobic fine particles | 5 degrees or less | 5 degrees or less |
| Example 19 | Example 10 | fluororesin | 5 degrees or less | 5 degrees or less |
| Example 20 | Example 14 | mixture | 5 degrees or less | 5 degrees or less |

Table 6 summarizes the results obtained by lightly rubbing each sample with #240 sandpaper 10 times. In all Examples 18 to 20, high superhydrophobicity is recovered.

It is thus found that the superhydrophobicity of the hydrophobic structure can be recovered only by a simple polishing work even when the superhydrophobicity of the superhydrophobic mixture layer is degraded.

### List of Reference Signs List

- 1:: hydrophobic fine particles,
- 3:: superhydrophobic mixture layer,
- 3a:: superhydrophobic mixture layer,
- 3b:: superhydrophobic mixture layer,
- 4:: fluororesin,
- 6:: exposed surface,
- 7:: contaminant deposit,
- 10:: hydrophobic structure,
- 10A:: hydrophobic structure,
- 10B:: hydrophobic structure

## Claims

1. A hydrophobic structure comprising:
a resin substrate; and
a superhydrophobic mixture layer formed on the resin substrate and
including a mixture of a hydrophobic part and a resin forming a surface portion of the resin substrate,
wherein the hydrophobic part includes one or both of a fluororesin and hydrophobic fine particles formed by subjecting inorganic fine particles having an average particle size of 5 nm or more and 30 nm or less to a hydrophobic treatment, and
wherein the superhydrophobic mixture layer has a surface roughness Sa of 1 µm or more and 10 µm or less.

2. A method for producing a hydrophobic structure,
the method comprising:
attaching a hydrophobic part to a surface of a resin substrate; and
polishing the surface of the resin substrate having the hydrophobic part attached thereto until the resin substrate has a surface roughness Sa of 1 µm or more and 10 µm or less,
wherein the hydrophobic part includes one or both of a fluororesin and hydrophobic fine particles having an average particle size of 5 nm or more and 30 nm or less.

3. The method for producing a hydrophobic structure of claim 2,
wherein the hydrophobic part includes both of the hydrophobic fine particles and the fluororesin, and a ratio of the fluororesin to the hydrophobic fine particles is 30 % or more and 300 % or less by weight ratio.

4. The method for producing a hydrophobic structure of claim 2 or 3,
wherein the attaching involves applying a powder of the hydrophobic part to the surface of the resin substrate.

5. The method for producing a hydrophobic structure of any one of claims 2 to 4,
wherein an amount of the hydrophobic part added to the surface of the resin substrate in the attaching is 0.1 g or more and 0.5 g or less per 100 cm² of the surface.

6. The method for producing a hydrophobic structure of claim 2 or 3,
wherein the attaching involves applying a solution containing the hydrophobic part to the surface of the resin substrate.

7. The method for producing a hydrophobic structure of claim 6,
wherein an amount of the hydrophobic part added to the surface of the resin substrate in the attaching is 0.05 g or more and 0.5 g or less per 100 cm² of the surface in terms of a weight after drying of the solution applied to the surface of the resin substrate.

8. A method for recovering hydrophobicity of a hydrophobic structure,
the hydrophobic structure including:
a resin substrate, and
a superhydrophobic mixture layer formed on the resin substrate and
including a mixture of a hydrophobic part and a resin forming a surface portion of the resin substrate,
the hydrophobic part including one or both of a fluororesin and hydrophobic fine particles formed by subjecting inorganic fine particles having an average particle size of 5 nm or more and 30 nm or less to a hydrophobic treatment,
the method comprising:
polishing a surface of the hydrophobic structure so that the superhydrophobic mixture layer has a surface roughness Sa of 1 µm or more and 10 µm or less.
